# EUROPÄISCHE PATENTSCHRIFT

(11) **EP 3 294 094 B1**
(45) Veröffentlichungstag und Bekanntmachung des Hinweises auf die Patenterteilung: **09.09.2020**
(21) Anmeldenummer: 16725351.7
(22) Anmeldetag: 29.04.2016
(51) Int. Cl.: A47C 1/11, G08B 5/22

(54) **ERFASSEN DER BELEGUNG EINES FRISEURSTUHLS DURCH EINE PERSON**
DETECTION OF THE OCCUPATION OF A HAIR SALON CHAIR BY A PERSON
DÉTECTION DE L'OCCUPATION D'UN FAUTEUIL DE COIFFEUR PAR UNE PERSONNE

(30) Priorität: 13.05.2015 DE 202015003745 U
(43) Veröffentlichungstag der Anmeldung: 21.03.2018
(73) Patentinhaber: La Hair Consulting Group GmbH, 45326 Essen (DE)
(72) Erfinder: ADLER, Lisandro, 45326 Essen (DE)
(74) Vertreter: Von Rohr Patentanwälte Partnerschaft mbB
(86) Internationale Anmeldenummer: PCT/DE2016/100197
(87) Internationale Veröffentlichungsnummer: WO 2016/180399

(56) Entgegenhaltungen:
- DE-A1- 19 842 946
- DE-A1-102005 048 080
- JP-A- 2004 136 811
- US-A1- 2008 094 213

## Beschreibung

Die vorliegende Erfindung betrifft zwei Verfahren zum Auswerten eines Belegungszustands eines Friseurstuhls, gemäß Anspruch 1 bzw. 2 und einen Friseursalon gemäß Anspruch 14.

Sitz- und Liegemöbel der in Rede stehenden Art sind Einrichtungsgegenstände und dienen der Aufnahme einer Person oder mehrerer Personen, insbesondere zum Sitzen, Liegen, Schlafen und/oder Ruhen. Gattungsbildende Sitz- und Liegemöbel kommen vorwiegend im Innenbereich, wie z. B. in Wohn- und Geschäftsräumen, zum Einsatz. Im Sinne der vorliegenden Erfindung gehören zu Sitzmöbeln Friseurstühle, Fernsehsessel und Restaurantstühle und zu Liegemöbeln Betten.

Friseurstühle der in Rede stehenden Art dienen der Aufnahme einer Person (im Allgemeinen einer Kundin bzw. eines Kunden) während einer Haarbehandlung, insbesondere der Behandlung des Kopfhaares der Person, ganz besonders der Pflege des Kopfhaares und der Gestaltung der Frisur der Person. Typischerweise wird diese Behandlung durch eine Fachkraft für Haarbehandlungen, insbesondere eine Friseurin bzw. einen Friseur, eine Hairstylistin bzw. einen Hairstylist o. dgl. vorgenommen. Zur Behandlung des Kopfhaares einer Person gehört unter anderem das Schneiden, Föhnen, Färben, Tönen, Stylen und das Anbringen von Haarverlängerungen. Zum Teil werden Friseurstühle aber auch zur Behandlung von Augenbrauen, Wimpern und/oder eines Bartes benutzt. Teilweise werden solche Friseurstühle auch zum Waschen des Kopfhaares an einem Friseurwaschplatz verwendet.

Ein Friseurstuhl der in Rede stehenden Art ist üblicherweise drehbar, neigbar und/oder bewegbar, insbesondere rollbar. Meist weist ein Friseurstuhl einen Sitz mit einer Sitzfläche, eine Rückenlehne, zwei seitliche Armlehnen und ein Fußteil auf. Das Fußteil kann z. B. eine Standsäule und ein Fußkreuz mit Rollen aufweisen.

Typisch für einen Friseurstuhl ist, dass er höhenverstellbar ist, auch während die zu behandelnde Person den Friseurstuhl belegt, insbesondere auf diesem sitzt. Häufig wird eine Höhenverstellung mittels einer hydraulischen Hubvorrichtung realisiert. Die Hubvorrichtung ermöglicht selbstverständlich auch ein Absenken des Friseurstuhls. Eine hydraulische Hubvorrichtung wird üblicherweise mittels eines Hebels verstellt, wobei der Hebel meist durch einen Fuß betätigt wird.

Ein gattungsgemäßer Friseurstuhl ist aus der US 4,372,605 A und aus der DE 10 2008 018 654 A1 bekannt. Die bekannten Friseurstühle weisen einen Sitz, eine Rückenlehne, zwei seitliche Armlehnen, ein Fußteil und eine mechanisch bzw. elektrisch angetriebene Hubvorrichtung zur Höhenverstellung des Friseurstuhls auf.

Typischerweise kommen Friseurstühle der in Rede stehenden Art in einem Friseursalon zum Einsatz. Im Umfeld eines Friseurstuhls, insbesondere in einem Friseursalon mit einem Friseurstuhl, gibt es zahlreiche Prozesse, die in Abhängigkeit davon, ob eine Person den Friseurstuhl belegt (also auf ihm sitzt) oder nicht, unterschiedlich ausgestaltet werden können bzw. müssen.

So ist es z. B. wünschenswert, in einem Friseursalon grundsätzlich Licht mit einer niedrigen Farbtemperatur (sogenanntes "warmes Licht") auszustrahlen, um eine angenehme und wohlige Atmosphäre zu schaffen. Warmes Licht ist aber während der Behandlung des Kopfhaares einer Person ungeeignet, da es nicht die typischen Tageslichtverhältnisse (üblicherweise mit einer hohen Farbtemperatur, also "kaltes Licht") wiederspiegelt und somit zu einem verfälschten subjektiven Eindruck führen kann. Demzufolge ist es vorteilhaft, das in der näheren Umgebung des Friseurstuhls ausgestrahlte Licht so zu steuern, dass beim Hinsetzen einer Person (einer Kundin bzw. eines Kunden) auf den Friseurstuhl vom grundsätzlich ausgestrahlten warmen Licht in kaltes Licht gewechselt wird. Vorzugsweise erfolgt dieser Farbtemperaturwechsel automatisch.

Es kann auch wünschenswert sein, Lichtquellen in der näheren Umgebung des Friseurstuhls erst dann einzuschalten, wenn eine Kundin bzw. ein Kunde den Friseurstuhl belegt, und wieder auszuschalten, sobald die Kundin bzw. der Kunde wieder aufsteht. Auf diese Weise kann eine erhebliche Menge Energie eingespart werden.

Um von der Belegung des Friseurstuhls abhängige Prozesse möglichst komfortabel und effizient ausgestalten zu können, ist es vorteilhaft, wenn die Belegung des Friseurstuhls automatisiert erfasst und diese Prozesse automatisch je nach Belegungszustand durchgeführt werden.

Die DE 10 2005 048 080 A1 offenbart ein Verfahren zur Bestimmung der Belegung von Sitzen in einem Fahrzeug oder einem Bereich mit einer Vielzahl von Sitzen, deren Berechtigung zur Belegung auf der Basis eines Tickets erfolgt. Das Ticket ist mit einem RFID-Tag versehen, umfassend einen RFID-Reader, der jeweils einem Sitz zugeordnet ist und der mit einem zentralen Datenerfassungssystem verbunden ist. Das Verfahren umfasst das Erfassen des RFID-Tags durch den Reader am Sitz, das Übermitteln der erfassten Daten und der Identität des Readers an das zentrale Datenerfassungssystem, das Speichern der Belegung und die Bereitstellung der Belegung über Schnittstellen für andere Anwendungen.

Eine Aufgabe der vorliegenden Erfindung ist es, ein Verfahren und einen Friseursalon anzugeben, die die automatische Durchführung von Prozessen ermöglichen, deren Ausgestaltung von der Belegung eines Friseurstuhls durch eine Person abhängt.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, in Bezug auf die übrigen Erfindungsaspekte entsprechend gelten.

Dies vorausgeschickt, wird im Folgenden die vorliegende Erfindung näher beschrieben.

Ein erster Aspekt besteht darin, einen Friseurstuhl mit mindestens einem Sensor zur qualitativen und/oder quantitativen Erfassung einer physikalischen Messgröße, die eine Belegung des Friseurstuhls durch eine Person in indizieren, zu versehen. Eine dazu geeignete physikalische Messgröße stellt z. B. ein durch die Person verursachter Druck auf den Friseurstuhl, eine durch die Person verursachte Temperaturänderung, der Abstand der Person zum Friseurstuhl, eine Pulsfrequenz der Person, eine Atemfrequenz der Person und eine durch die Person verursachte Änderung eines Lichtstrahls dar.

Eine durch die Person verursachte Änderung eines Lichtstrahls lässt sich z. B. mittels einer Lichtschranke mit einem Photodetektor, wie einer Photodiode, einem Phototransistor oder einem Fotowiderstand, erfassen.

Der Friseurstuhl ermöglicht eine automatisierte Erfassung der Belegung des Friseurstuhls durch eine Person. Insbesondere lässt sich mit Hilfe des Friseurstuhls automatisiert ermitteln, wenn eine Person sich auf den Friseurstuhl setzt bzw. von dem Friseurstuhl wieder aufsteht.

Die Messdaten des Sensors lassen sich z. B. mit Hilfe elektronischer Schaltungen automatisiert auswerten und einer Steuerung bzw. Datenverarbeitung zuführen. Auf diese Weise können von der Belegung des Friseurstuhls abhängige Prozesse automatisiert vollzogen werden.

Vorzugsweise ist der Sensor des Friseurstuhls als piezoelektrischer Drucksensor ausgebildet. Piezoelektrische Drucksensoren basieren auf dem piezoelektrischen Effekt und sind aus dem Stand der Technik bekannt. Solche Sensoren erfassen Änderungen des auf die Sensoren ausgeübten Drucks, wobei aufgrund der Druckänderung elektrische Ladungen erzeugt werden.

Vorteilhaft ist es, wenn der piezoelektrische Drucksensor zur qualitativen Erfassung einer durch die Person verursachten Änderung eines Druckes auf den Friseurstuhl ausgebildet ist. Mit einem solchen Sensor lässt sich erfassen, wenn eine Person den Friseurstuhl belegt, insbesondere sich auf den Friseurstuhl setzt, und wenn eine Person von dem Friseurstuhl aufsteht.

Gemäß einer bevorzugten Ausgestaltung des Friseurstuhls ist der Sensor in den Friseurstuhl integriert, insbesondere in einen Sitz, eine Rückenlehne, eine Armlehne und/oder ein Fußteil des Friseurstuhls. Diese Ausgestaltung ist zum einen zweckmäßig für die Funktion des Sensors. Zum anderen schafft diese Ausgestaltung einen gefälligen Eindruck, da der Sensor im Betrieb für die Person nicht sichtbar ist.

Der Begriff "Sitz", wie er im Rahmen der vorliegenden Erfindung verwendet wird, bezeichnet den Bereich des Friseurstuhls, der zumindest hauptsächlich dazu bestimmt ist, als Sitzgelegenheit zu dienen, also so gestaltet ist, dass sich die Person darauf setzen kann. Der Sitz kann gepolstert sein und/oder ein oder mehrere Polster und/oder Sitzkissen können auf dem Sitz angeordnet sein.

Vorzugsweise weist der Friseurstuhl mindestens eine Leseeinheit auf, die zum Auslesen einer die Person identifizierenden Kennung eines Transponders ausgebildet ist. Hierzu eignet sich insbesondere eine mit einem RFID-Transponder korrespondierende Leseeinheit, die mittels magnetischer Wechselfelder und/oder hochfrequenter Radiowellen eine Kopplung mit dem RFID-Transponder herstellen kann. Bevorzugt ist das Lesegerät zur Datenverarbeitung mittels eines Mikroprogramms und einer Middleware mit einer Schnittstelle zu weiteren elektronischen Schaltungen ausgebildet.

Mit Hilfe eines Systems aus der Leseeinheit des Friseurstuhls und einem RFID-Transponder lassen sich Objekte und Personen automatisch und berührungslos identifizieren und lokalisieren. Ein mit der Leseeinheit des Friseurstuhls korrespondierender RFID-Transponder kann z. B. in einem der Person überreichten Objekt, wie z. B. einem Armband oder einem zum Ausfüllen durch die Friseurin bzw. den Friseur bestimmten Formular, untergebracht sein. Der RFID-Transponder kann dann vor Übergabe an die Person mit einer vorbestimmten Kennung versehen werden. Befindet sich die Person schließlich in der Nähe des Friseurstuhls, kann mit Hilfe der Leseeinheit diese Kennung ausgelesen und weiterverarbeitet bzw. ausgewertet werden. Die ausgelesene Kennung erlaubt zum einen die Identifizierung der Person und zum anderen deren Lokalisierung. Diese Informationen können für personenbezogene Prozesse genutzt werden.

Es hat sich als vorteilhaft erweisen, wenn der Friseurstuhl zur Verarbeitung eines vom Sensor und/oder der Leseeinheit erzeugten Signals ausgebildet ist. Hierzu gehören typische Verfahren der Signalverarbeitung, wie z. B. Verstärkung, Umwandlung, Kodierung und/oder Paketierung, aber auch eine Auswertung. Für solche Zwecke kann z. B. ein Signalprozessor eingesetzt werden.

Der Friseurstuhl kann eine Datenverarbeitungseinheit aufweisen, die den zuvor genannten Signalprozessor umfassen kann. Die Datenverarbeitungseinheit des Friseurstuhls ist zur Bestimmung eines Belegungszustands des Friseurstuhls auf Basis des vom Sensor erzeugten Signals und zur Erstellung eines Belegungszustandssignals ausgebildet.

Der Begriff "Belegungszustand", wie er im Rahmen der vorliegenden Erfindung verwendet wird, kennzeichnet den Zustand der Belegung des Friseurstuhls. In der einfachsten Form gibt es genau zwei Belegungszustände, nämlich den Belegungszustand "belegt" und den Belegungszustand "unbelegt", wobei ein Übergang nur von einem in den anderen Belegungszustand möglich ist. Zusätzlich kann der Belegungszustand eine Angabe über die seit der letzten Zustandsänderung vergangene Zeit enthalten. So könnte der Belegungszustand z. B. den Wert "seit 5 Minuten belegt" annehmen. Der Belegungszustand kann auch noch weitergehende Auswertungen auffassen, wie z. B. "nur kurz aufgestanden und wieder hingesetzt".

Bei der Erstellung des Belegungszustandssignals bringt die Datenverarbeitungseinheit des Friseurstuhls den bestimmten Belegungszustand in Signalform. Somit transportiert das Belegungszustandssignal den Belegungszustand.

Typischerweise wird also ein vom Sensor stammendes Ausgangssignal nicht direkt und nicht durch den Sensor selbst zur Bestimmung eines Belegungszustands des Friseurstuhls ausgewertet. Vielmehr erfolgt zunächst eine Signalverarbeitung des Ausgangssignals des Sensors und eine Weiterleitung des verarbeiteten Signals an die Datenverarbeitungseinheit. Die Datenverarbeitungseinheit wertet das verarbeitete Signal aus und bestimmt dann einen Belegungszustand des Friseurstuhls auf Basis des vom Sensor erzeugten Signals. Daraufhin erstellt die Datenverarbeitungseinheit ein Belegungszustandssignal, das an weitere elektronische Schaltungen des Friseurstuhls weitergeleitet werden kann.

Die Bestimmung eines Belegungszustands des Friseurstuhls erfolgt jedoch nur optional durch den Friseurstuhl. Es ist auch möglich, diese Bestimmung eines Belegungszustands des Friseurstuhls durch eine Vorrichtung außerhalb des Friseurstuhls vornehmen zu lassen. In diesem Fall wird die im Ausgangssignal des Sensors enthaltene Information zur erfassten physikalischen Messgröße nach einer Signalverarbeitung an diese Vorrichtung außerhalb des Friseurstuhls übermittelt.

Der Friseurstuhl weist mindestens eine Sendeeinheit auf, die zum Empfang eines von dem Sensor und/oder der Leseeinheit erzeugten und vom Friseurstuhl verarbeiteten Signals und/oder eines Belegungszustandssignals der Datenverarbeitungseinheit und zum drahtlosen Senden eines Signals ausgebildet ist.

Mit Hilfe der Sendeeinheit lassen sich Signale drahtlos an eine Empfangseinheit außerhalb des Friseurstuhls senden, ohne dass ein Kabel zwischen der Sendeeinheit des Friseurstuhls und der Empfangseinheit außerhalb des Friseurstuhls erforderlich ist. Dies gewährleistet die Mobilität und eine komfortable Handhabung des Friseurstuhls. Außerdem sorgt dies für einen besseren optischen Eindruck.

Bei der Übermittlung eines Drahtlossignals an die Empfangseinheit ist zu berücksichtigen, dass sich die Empfangseinheit typischerweise weniger als 100 m entfernt von der Sendeeinheit des Friseurstuhls befindet. Die Übertragung von der Sendeeinheit des Friseurstuhls zur Empfangseinheit findet typischerweise innerhalb eines Gebäudes, gelegentlich innerhalb eines Raumes statt. Wichtig ist eine robuste und zuverlässige Übertragung auch ohne direkte Sichtverbindung, so dass das Drahtlossignal von der Empfangseinheit korrekt empfangen werden kann. Grundsätzlich kommen als Drahtlostechnologie dementsprechend WPAN- und WLAN-Technologien in Frage. Vorzugsweise kommt als Drahtlostechnologie Bluetooth zum Einsatz. Aufgrund der Energiesparsamkeit ist die Bluetooth-Version 4.0 (Low Energy) besonders bevorzugt.

Die Sendeeinheit des Friseurstuhls ist zum drahtlosen Senden eines vom Sensor erzeugten und vom Friseurstuhl verarbeiteten Signals, eines Belegungszustandssignals der Datenverarbeitungseinheit, einer von der Leseeinheit ausgelesenen und verarbeiteten Kennung, einer Adresse des Friseurstuhls, eines Fehlercodes und/oder einer Information über den Zustand eines Energiespeichers des Friseurstuhls ausgebildet.

Mit Hilfe eines Fehlercodes können der Empfangseinheit Fehler mitgeteilt werden, die in Komponenten des Friseurstuhls aufgetreten sind. So kann ein Fehlercode z. B. die Information transportieren, dass der Sensor des Friseurstuhls defekt ist, dass ein Messfehler aufgetreten ist und/oder dass der Belegungszustand aktuell unbestimmt ist.

Der Energiespeicher des Friseurstuhls kann eine, mehrere oder alle elektronischen Schaltungen des Friseurstuhls, wie z. B. die Leseeinheit, die Datenverarbeitungseinheit und die Sendeeinheit, mit Energie versorgen. Als Energiespeicher werden vorzugsweise Batterien eingesetzt, die vorteilhafterweise wiederaufladbar sind.

Das drahtlose Senden erfolgt typischerweise mit Hilfe von einzelnen Datenpaketen, wobei ein Datenpaket auch nur einen Teil der zuvor genannten Informationen beinhalten kann.

Vorzugsweise weist der Friseurstuhl mehrere Sensoren auf, wobei mindestens zwei der Sensoren zur Erfassung einer unterschiedlichen physikalischen Messgröße ausgebildet sind. So könnte der Friseurstuhl z. B. drei Sensoren aufweisen, wobei zwei Sensoren zur Erfassung eines durch die Person verursachten Druckes auf den Friseurstuhl und ein Sensor zur Erfassung einer durch die Person verursachten Änderung eines Lichtstrahls ausgebildet sind. Auf diese Weise kann der Friseurstuhl unterschiedliche physikalische Messgrößen, die eine Belegung des Friseurstuhls durch eine Person indizieren, erfassen und durch geeignete Verarbeitung miteinander in Bezug setzen, so dass ein Belegungszustand des Friseurstuhls zuverlässiger bestimmt werden kann. Vorzugsweise ist dann die Sendeinheit des Friseurstuhls zum Empfang eines vom jeweiligen Sensor erzeugten und vom Friseurstuhl verarbeiteten Signals ausgebildet.

In einer bevorzugten Ausgestaltung des Friseurstuhls weist der Friseurstuhl mindestens eine Fernbedienung zur Steuerung einer externen Vorrichtung, insbesondere einer Vorrichtung zur Wiedergabe von Bild- und/oder Audiodaten auf. Bei der externen Vorrichtung kann es sich z. B. um einen Fernseher, ein Radio, einen DVD-Player, einen Blu-ray-Player, einen Computer, ein Tablet oder eine Spielkonsole handeln. Mit Hilfe der Fernbedienung kann die den Friseurstuhl belegende Person selbst die externe Vorrichtung kabellos bedienen.

Ein weiterer Aspekt ist die Verwendung eines Sensors für einen Friseurstuhl zur qualitativen und/oder quantitativen Erfassung einer physikalischen Messgröße, die eine Belegung des Friseurstuhls durch eine Person indiziert. Insbesondere kann die physikalische Messgröße wiederum ein durch die Person verursachter Druck auf den Friseurstuhl, eine durch die Person verursachte Temperaturänderung, der Abstand der Person zum Friseurstuhl, eine Pulsfrequenz der Person, eine Atemfrequenz der Person und/oder eine durch die Person verursachte Änderung eines Lichtstrahls sein.

Bei einer bevorzugten Ausgestaltung der Verwendung ist der Sensor in den Friseurstuhl integriert und/oder der Sensor als vorzugsweise piezoelektrischer Drucksensor ausgebildet. Vorteilhafterweise wird ein vom Sensor erzeugtes und vom Friseurstuhl verarbeitetes Signal von einer Sendeeinheit des Friseurstuhls empfangen sowie weiterverarbeitet und das weiterverarbeitete Signal wird mittels der Sendeeinheit drahtlos an eine Empfangseinheit übermittelt.

Vorzugsweise ist der Sensor so ausgebildet, wie es oben zum Friseurstuhl als solchen erläutert worden ist.

Ein erster Gegenstand der vorliegenden Erfindung ist ein erstes Verfahren zum Auswerten eines Belegungszustands eines Sitz- oder Liegemöbel, insbesondere Friseurstuhls, gemäß Anspruch 1.

Bei dem ersten erfindungsgemäßen Verfahren übernimmt also der Friseurstuhl die Erfassung einer ersten physikalischen Messgröße, die Verarbeitung des erfassten Signals und das drahtlose Übermitteln des verarbeiteten Signals. Der Belegungszustand des Friseurstuhls wird mittels einer Datenverarbeitungseinrichtung außerhalb des Friseurstuhls bestimmt. Somit ermöglicht das erste erfindungsgemäße Verfahren eine geringere Komplexität auf Seiten des Friseurstuhls.

Ein zweiter Gegenstand der vorliegenden Erfindung ist ein zweites Verfahren zum Auswerten eines Belegungszustands eines Sitz- oder Liegemöbels, insbesondere eines Friseurstuhls, gemäß Anspruch 2.

Gemäß dem zweiten erfindungsgemäßen Verfahren wird ein Belegungszustand des Friseurstuhls vom Friseurstuhl, nämlich einer Datenverarbeitungseinheit des Friseurstuhls, bestimmt. Aus dem bestimmten Belegungszustand wird ein Belegungszustandssignal erstellt und dieses wird weiterverarbeitet und dann drahtlos übermittelt. Das verarbeitete vom Sensor erzeugte Signal kann optional zusätzlich mit an die Empfangseinheit übermittelt werden. Vorzugsweise wird jedoch nur das weiterverarbeitete Belegungszustandssignal an die Empfangseinheit übermittelt.

Das Auswerten des Belegungszustands gemäß dem zweiten erfindungsgemäßen Verfahren umfasst folgende Prozesse:
- Steuerung oder Regelung
   - der von mindestens einer Lichtquelle hervorgerufenen Beleuchtungsstärke,
   - einer von mindestens einer Lichtquelle hervorgerufenen Lichtfarbe bzw. Farbtemperatur,
   - der Wellenlänge/n des von mindestens einer Lichtquelle abgestrahlten Lichts,
   - einer Temperatur in zumindest einem Teilbereich eines Raums, in dem sich der Friseurstuhl befindet, und/oder
   - einer Belüftung in zumindest einem Teilbereich eines Raums, in dem sich der Friseurstuhl befindet,
- Wiedergabe von Informationen, insbesondere Werbung, wobei vorzugsweise zumindest ein Teil der Informationen eine Teilfläche eines Spiegels einnimmt,
- Starten bzw. Stoppen eines Zeitmessers, vorzugsweise wobei bei Überschreiten eines Schwellwertes automatisch eine Meldung generiert wird,
- Bestimmung einer Auslastung des Friseurstuhls innerhalb eines bestimmten Zeitraums und/oder
- Überprüfung eines Bezahlvorgangs der Person.

Mittels des ersten bzw. zweiten erfindungsgemäßen Verfahrens lassen sich also eine oder mehrere Lichtquellen, insbesondere in der Nähe des Friseurstuhls, an- bzw. abschalten oder der Lichtstrom oder die Lichtstärke dieser Lichtquellen steuern bzw. regeln, und zwar in Abhängigkeit von dem bestimmten Belegungszustand des Friseurstuhls. Auch die von mindestens einer Lichtquelle hervorgerufene Lichtfarbe bzw. Farbtemperatur lässt sich in warmes bzw. kaltes Licht ändern, je nachdem ob der Friseurstuhl durch eine Person belegt ist oder nicht. Entsprechendes gilt für die Wellenlänge/n des von der/den Lichtquelle/n abgestrahlten Lichts, die Temperatur und die Belüftung in der Nähe des Friseurstuhls.

Mit den beiden erfindungsgemäßen Verfahren kann auch erreicht werden, dass eine Information wiedergegeben wird, z. B. Werbung oder ein Fernsehprogramm, sobald eine Belegung des Friseurstuhls durch eine Person festgesellt wurde, bzw. diese Informationen nicht mehr angezeigt werden, sobald festgestellt wird, dass die Person den Friseurstuhl nicht mehr belegt. Vorzugsweise kann zumindest ein Teil der Informationen in einem dem Friseurstuhl zugeordneten Spiegel eingeblendet werden.

Wird mit Hilfe der erfindungsgemäßen Verfahren festgestellt, dass der Friseurstuhl durch eine Person belegt wird, kann das Starten bzw. Stoppen eines Zeitmessers dazu genutzt werden, abhängig von der Dauer der Belegung durch die Person Waren, wie z. B. ein Getränk, Essen und eine Zeitschrift, und/oder Dienstleistungen, wie z. B. eine Massage, anzubieten.

Mit den erfindungsgemäßen Verfahren kann aber auch ein Mitarbeiter oder eine elektronische Vorrichtung davon informiert werden, dass eine Person vom Friseurstuhl aufgestanden ist, woraufhin überprüft werden kann, ob die Person einen Bezahlvorgang vornimmt bzw. vorgenommen hat. Ggf. kann die Person an die Durchführung eines Bezahlvorgangs erinnert werden.

Vorzugsweise umfassen das erste und das zweite erfindungsgemäße Verfahren zusätzlich folgende Verfahrensschritte:
- Identifizieren der den Friseurstuhl belegenden Person mittels einer Leseeinheit des Friseurstuhls,
- Erstellen einer Identitätsinformation,
- Drahtloses Übermitteln der Identitätsinformation an die Empfangseinheit mittels der Sendeeinheit des Friseurstuhls,
- Wiedergabe von Informationen über die Person, insbesondere über frühere Friseurbehandlungen an der Person und, optional,
- Anzeigen einer Abbildung der Person, wobei die Abbildung vorzugsweise eine Teilfläche eines Spiegels einnimmt.

Mit Hilfe dieser bevorzugten Ausgestaltung der erfindungsgemäßen Verfahren lassen sich personenbezogene Daten zu früheren Friseurbehandlungen abrufen und auf diese Weise die Beratung und/oder Behandlung der Person erweitern bzw. verbessern. Mit dem Anzeigen einer Abbildung der Person können z. B. unterschiedliche Frisuren und/oder Haarfarben bzw. -tönungen und somit eine Vorher-/Nachher-Ansicht dargestellt werden.

Vorzugsweise umfassen die beiden erfindungsgemäßen Verfahren zusätzlich die qualitative und/oder quantitative Erfassung einer zweiten, von der ersten verschiedenen physikalischen Messgröße, die eine Belegung des Friseurstuhls durch eine Person indiziert. Dies kann mittels mindestens eines zweiten Sensors des Friseurstuhls realisiert werden. Mit Hilfe der vom ersten Sensor erfassten Messgröße und der vom zweiten Sensor erfassten Messgröße kann ein Belegungszustand des Friseurstuhls zuverlässiger bestimmt werden. Dies kann insbesondere dadurch realisiert werden, dass die erfassten Messgrößen des ersten und des zweiten Sensors korreliert werden. Dabei kann die Bestimmung des Belegungszustands des Friseurstuhls außerhalb des Friseurstuhls gemäß dem ersten erfindungsgemäßen Verfahren oder durch die Datenverarbeitungseinheit des Friseurstuhls gemäß dem zweiten erfindungsgemäßen Verfahren durchgeführt werden.

Es ist bevorzugt, wenn die erfindungsgemäßen Verfahren ferner das Zuordnen des Friseurstuhls zu einem Spiegel anhand der übermittelten Adresse des Friseurstuhls umfassen. Auf diese Weise können die Informationen, die den Friseurstuhl und/oder die den Friseurstuhl belegende Person betreffen, an dem Spiegel angezeigt werden, vor dem der Friseurstuhl gerade steht.

Ein weiterer Gegenstand der vorliegenden Erfindung ist ein Friseursalon gemäß Anspruch 14.

Die zuvor erläuterten Konstruktionen und Prinzipien lassen sich auch auf ein Bett übertragen. Typischerweise hat ein solches Bett ein Gestell, mindestens einen Lattenrost, mindestens eine Matratze und mindestens eine Matratzenauflage.

Ein solches Bett hat wenigstens einen Sensor zur qualitativen und/oder quantitativen Erfassung einer physikalischen Messgröße, die eine Belegung des Bettes durch mindestens eine Person indiziert. Geeignete physikalische Messgrößen stellen z. B. ein durch die Person/en verursachter Druck auf das Bett, eine durch die Person/en verursachte Temperaturänderung, der Abstand der Person/en zum Bett, eine Pulsfrequenz der Person/en, eine Atemfrequenz der Person/en und/oder eine durch die Person/en verursachte Änderung eines Lichtstrahls dar.

Der wenigstens eine Sensor kann wie oben zum Friseurstuhl erläutert ausgebildet sein.

Der Sensor ist vorzugsweise in das Bett integriert, insbesondere in ein Gestell, ein Lattenrost, eine Matratze und/oder eine Matratzenauflage des Bettes.

Das Bett kann ferner eine Leseeinheit, eine Datenverarbeitungseinheit und/oder eine Sendeeinheit umfassen, die jeweils so ausgebildet sind, wie es zum Friseurstuhl beschrieben ist.

Auch die beschriebene Verwendung und die erfindungsgemäßen Verfahren können mit entsprechenden Anpassungen auf ein Bett übertragen werden.

Hinsichtlich des Auswertens eines Belegungszustands eines Bettes steht vor allem die Steuerung und/oder Regelung, wie sie zuvor zum Friseurstuhl erläutert wurde, im Vordergrund. Somit kann in Abhängigkeit von dem Belegungszustand des Bettes die von mindestens einer Lichtquelle hervorgerufene Beleuchtungsstärke im Umfeld des Bettes gesteuert bzw. geregelt, insbesondere an- bzw. ausgeschaltet werden. Entsprechendes gilt für die Lichtfarbe, die Wellenlänge/n, die Temperatur und die Belüftung.

Darüber hinaus können in Abhängigkeit des Belegungszustands des Bettes Informationen wiedergegeben werden. Insbesondere kann bei festgestellter Belegung des Bettes durch eine oder mehrere Personen ein Fernseher und/oder ein Radio eingeschaltet werden.

Ferner kann ein Zeitmesser gestartet bzw. gestoppt werden, wenn festgestellt wird, dass das Bett durch eine oder mehrere Personen belegt bzw. unbelegt ist. Die Daten des Zeitmessers lassen sich dann z. B. hinsichtlich der Schlafdauer und des Schlafrhythmus auswerten.

Die zuvor erläuterten Konstruktionen und Prinzipien lassen sich auch auf einen Fernsehsessel übertragen. Typischerweise hat ein solcher Fernsehsessel einen Sitz, eine Rückenlehne, zwei Armlehnen und ein Fußteil.

Ein solcher Fernsehsessel hat wenigstens einen Sensor zur qualitativen und/oder quantitativen Erfassung einer physikalischen Messgröße, die eine Belegung des Fernsehsessels durch eine Person indiziert. Geeignete physikalische Messgrößen stellen z. B. ein durch die Person/en verursachter Druck auf den Fernsehsessel, eine durch die Person/en verursachte Temperaturänderung, der Abstand der Person/en zum Fernsehsessel, eine Pulsfrequenz der Person/en, eine Atemfrequenz der Person/en und/oder eine durch die Person/en verursachte Änderung eines Lichtstrahls dar.

Der wenigstens eine Sensor kann wie oben zum Friseurstuhl erläutert ausgebildet sein.

Der Sensor ist vorzugsweise in den Fernsehsessel integriert, insbesondere in einen Sitz, eine Rückenlehne, eine Armlehne und/oder ein Fußteil des Fernsehsessels.

Der Fernsehsessel kann ferner eine Leseeinheit, eine Datenverarbeitungseinheit und/oder eine Sendeeinheit umfassen, die jeweils so ausgebildet sind, wie es zum Friseurstuhl beschrieben ist.

Auch die beschriebene Verwendung und die erfindungsgemäßen Verfahren können mit entsprechenden Anpassungen auf einen Fernsehsessel übertragen werden.

Hinsichtlich des Auswertens eines Belegungszustands eines Fernsehsessels steht vor allem die Steuerung und/oder Regelung, wie sie zuvor zum Friseurstuhl erläutert wurde, im Vordergrund. Somit kann in Abhängigkeit von dem Belegungszustand des Fernsehsessels die von mindestens einer Lichtquelle hervorgerufene Beleuchtungsstärke im Umfeld des Fernsehsessels gesteuert bzw. geregelt, insbesondere an- bzw. ausgeschaltet werden. Entsprechendes gilt für die Lichtfarbe, die Wellenlänge/n, die Temperatur und die Belüftung.

Darüber hinaus können in Abhängigkeit des Belegungszustands des Fernsehsessels Informationen wiedergegeben werden. Insbesondere kann bei festgestellter Belegung des Fernsehsessels durch eine Person ein Fernseher, ein Radio und/oder weitere Multimediageräte eingeschaltet werden.

Ferner kann ein Zeitmesser gestartet bzw. gestoppt werden, wenn festgestellt wird, dass der Fernsehsessel durch eine Person belegt bzw. unbelegt ist. Die Daten des Zeitmessers lassen sich dann z. B. hinsichtlich des Fernsehkonsums auswerten.

Die zuvor erläuterten Konstruktionen und Prinzipien lassen sich auch auf einen Restaurantstuhl übertragen. Typischerweise hat ein solcher Restaurantstuhl einen Sitz, eine Rückenlehne und vier Beine.

Ein solcher Restaurantstuhl hat wenigstens einen Sensor zur qualitativen und/oder quantitativen Erfassung einer physikalischen Messgröße, die eine Belegung des Restaurantstuhls durch eine Person indiziert. Geeignete physikalische Messgrößen stellen z. B. ein durch die Person/en verursachter Druck auf den Restaurantstuhl, eine durch die Person/en verursachte Temperaturänderung, der Abstand der Person/en zum Restaurantstuhl, eine Pulsfrequenz der Person/en, eine Atemfrequenz der Person/en und/oder eine durch die Person/en verursachte Änderung eines Lichtstrahls dar.

Der wenigstens eine Sensor kann wie oben zum Friseurstuhl erläutert ausgebildet sein.

Der Sensor ist vorzugsweise in den Restaurantstuhl integriert, insbesondere in einen Sitz, eine Rückenlehne und/oder ein Bein des Restaurantstuhls.

Der Restaurantstuhl kann ferner eine Leseeinheit, eine Datenverarbeitungseinheit und/oder eine Sendeeinheit umfassen, die jeweils so ausgebildet sind, wie es zum Friseurstuhl beschrieben ist.

Auch die beschriebene Verwendung und die erfindungsgemäßen Verfahren können mit entsprechenden Anpassungen auf einen Restaurantstuhl übertragen werden.

Hinsichtlich des Auswertens eines Belegungszustands eines Restaurantstuhls steht vor allem die Steuerung und/oder Regelung, wie sie zuvor zum Friseurstuhl erläutert wurde, im Vordergrund. Somit kann in Abhängigkeit von dem Belegungszustand des Restaurantstuhls die von mindestens einer Lichtquelle hervorgerufene Beleuchtungsstärke im Umfeld des Restaurantstuhls gesteuert bzw. geregelt, insbesondere an- bzw. ausgeschaltet werden. Entsprechendes gilt für die Lichtfarbe, die Wellenlänge/n, die Temperatur und die Belüftung.

Darüber hinaus können in Abhängigkeit des Belegungszustands des Restaurantstuhls Informationen wiedergegeben werden. Insbesondere kann bei festgestellter Belegung des Restaurantstuhls durch eine Person ein Fernseher und/oder ein Lautsprecher eingeschaltet werden.

Ferner kann ein Zeitmesser gestartet bzw. gestoppt werden, wenn festgestellt wird, dass der Restaurantstuhl durch eine Person belegt bzw. unbelegt ist. Die Daten des Zeitmessers lassen sich dann z. B. hinsichtlich der Auslastung eines Restaurants auswerten.

Die Erfindung wird nachfolgend anhand der Beschreibung bevorzugter Ausführungsbeispiele, zum Teil mit Bezugnahme auf die Zeichnung, näher erläutert. Die oben beschriebenen und/oder in den Ansprüchen und/oder in der nachfolgenden Beschreibung offenbarten Merkmale können bedarfsweise miteinander kombiniert werden, auch wenn dies nicht im Einzelnen ausdrücklich beschrieben ist.

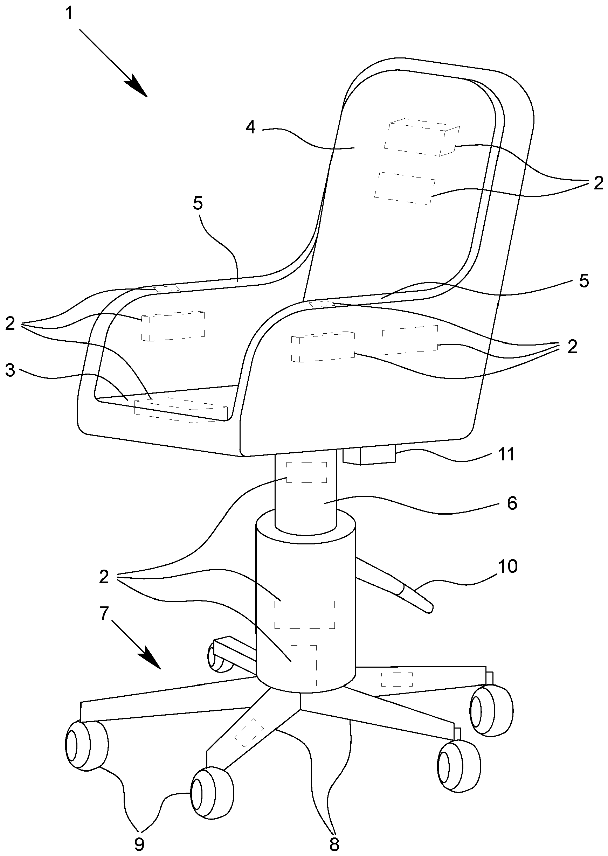

In der Zeichnung zeigt
- Fig. 1: schematisch eine perspektivische Ansicht einer bevorzugten Ausführungsform eines Friseurstuhls.

Fig. 1 zeigt schematisch eine perspektivische Ansicht einer bevorzugten Ausführungsform eines Friseurstuhls 1. Der Friseurstuhl 1 weist mehrere Sensoren 2 zur qualitativen und/oder quantitativen Erfassung einer physikalischen Messgröße auf, die eine Belegung des Friseurstuhls 1 durch eine Person indiziert.

Bei dem dargestellten und bevorzugten Ausführungsbeispiel sind die Sensoren 2 als piezoelektrische Drucksensoren zur qualitativen Erfassung einer durch die Person verursachten Änderung eines Druckes auf den Friseurstuhl 1 ausgebildet.

Vorteilhafterweise sind die piezoelektrischen Drucksensoren 2 so ausgelegt, dass sie eine Druckänderung erfassen können, die durch das Körpergewicht der Person, und zwar sowohl eines Kindes als auch eines Erwachsenen, typischerweise also in einem Körpergewichtsbereich von 5 kg bis 200 kg, verursacht wird.

Der Friseurstuhl 1 weist einen Sitz 3, eine Rückenlehne 4, zwei seitliche Armlehnen 5, eine Standsäule 6 und ein Fußkreuz 7 mit mehreren Armen 8, an denen jeweils eine Rolle 9 befestigt ist, auf. Ferner weist der Friseurstuhl 1 eine nicht näher dargestellte Hubvorrichtung zur Höhenverstellung des Friseurstuhls 1 auf. Diese Hubvorrichtung wird mittels eines Hebels 10 betätigt.

Die Rückenlehne 4 erstreckt sich ausgehend vom Sitz 3 im Wesentlichen in Richtung der Sitzhöhe, in Fig. 1 also vertikal, nach oben. Die beiden Armlehnen 5 sind seitlich, in Fig. 1 links bzw. rechts des Sitzes 3 und der Rückenlehne 4 angeordnet. Insofern begrenzen die Armlehnen 5 den Sitz 3 in seiner Sitzbreite.

Der Sitz 3 und die Rückenlehne 4 können miteinander dauerhaft verbunden und dabei starr oder zueinander beweglich ausgeführt sein. Vorzugsweise sind der Sitz 3 und die Rückenlehne 4 derart ausgeführt, dass die Neigung der Rückenlehne 4 gegenüber dem Sitz 3 für eine Person individuell einstellbar ist. Der Sitz 3 und die Rückenlehne 4 können auch als eine einstückige, feste Gesamtstruktur ausgebildet sein.

In Fig. 1 ist eine kleine Auswahl von möglichen Positionen für die Sensoren 2 gestrichelt angedeutet. Die Sensoren können natürlich auch an anderen Stellen des Friseurstuhls 1 angeordnet sein.

Bei dem dargestellten und bevorzugten Ausführungsbeispiel sind die Sensoren 2 in den Friseurstuhl 1 integriert, nämlich in den Sitz 3 des Friseurstuhls 1. Vorzugsweise sind die Sensoren 2 direkt unter einer Oberfläche des Sitzes 3 angeordnet, wobei diese Oberfläche in Fig. 1 den Sitz 3 nach oben hin begrenzt und selbst durch die Rückenlehne 4 sowie die beiden Armlehnen 5 begrenzt ist. Dies hat zum einen den Vorteil, dass die Sensoren 2 bei Gebrauch des Friseurstuhls 1 nicht sichtbar sind und nicht berührt werden können. Zum anderen gewährleistet eine Integration der Sensoren 2 in den Sitz 3, insbesondere unter der besagten Oberfläche des Sitzes 3, eine zuverlässige Erfassung einer durch die Person verursachten Änderung eines Druckes auf den Friseurstuhl 1. Bei Belegung des Friseurstuhls 1 ist es nämlich typischerweise so, dass der Sitz 3 durchgehend einem Druck durch die Person ausgesetzt ist, während die Rückenlehne 4 und/oder die Armlehnen 5 nicht oder nicht durchgehend einem Druck durch die Person ausgesetzt sein könnten. Die Anordnung der Sensoren 2 unter der besagten Oberfläche des Sitzes 3 hat weiterhin den Vorteil, dass an diesen Stellen ein auf den Sitz 3 ausgeübter Druck weniger gedämpft ist, als z. B. in der Standsäule 6 oder im Fußkreuz 7.

Die Integration der Sensoren 2 in den Sitz 3 kann bereits bei der Herstellung des Friseurstuhls 1 erfolgen. Die Sensoren 2 können aber auch nachträglich in einem bereits vorhandenen Friseurstuhl 1 nachgerüstet werden. Dazu kann z. B. der Sitz 3 geöffnet (z. B. an einer Naht) und nach Anordnen der Sensoren 2 im Sitz 3 und deren Verbinden mit weiteren Komponenten des Friseurstuhls 1 wieder verschlossen werden.

Bei der dargestellten und bevorzugten Ausführungsform ist der Friseurstuhl 1 zur Verarbeitung von von den Sensoren 2 erzeugten Signalen ausgebildet, insbesondere zur Verstärkung, Umwandlung, Auswertung, Kodierung und/oder Paketierung. Dazu weist der Friseurstuhl 1 eine oder mehrere elektronische Schaltungen auf (in Fig. 1 nicht dargestellt), z. B. einen Operationsverstärker und/oder einen Signalprozessor. Mittels der elektronischen Schaltungen findet eine geeignete Signalverarbeitung statt.

Optional kann der Friseurstuhl 1 eine nicht dargestellte Datenverarbeitungseinheit aufweisen, die zur Bestimmung eines Belegungszustands des Friseurstuhls 1 auf Basis der von den Sensoren 2 erzeugten Signale und zur Erstellung eines Belegungszustandssignals ausgebildet ist.

Bei der dargestellten und bevorzugten Ausführungsform weist der Friseurstuhl 1 eine nicht dargestellte Sendeeinheit auf, die vorzugsweise in einer Steuerbox 11 untergebracht ist. Die Sendeeinheit des Friseurstuhls 1 ist zum Empfang von von den Sensoren 2 erzeugten und vom Friseurstuhl 1 verarbeiteten Signalen und/oder eines Belegungszustandssignals der Datenverarbeitungseinheit und zum drahtlosen Senden eines Signals ausgebildet. Die Sendeeinheit kann also Signale der Sensoren 2 empfangen, daraus Informationen extrahieren und diese Informationen in ihrer ursprünglichen oder einer abgewandelten Form in ein drahtlos übertragbares Signal bringen und dieses Signal mittels einer Drahtlostechnologie senden. Als Drahtlostechnologie kommt hier Bluetooth zum Einsatz.

Insbesondere kann die Sendeeinheit des Friseurstuhls 1 von den Sensoren 2 erfasste und vom Friseurstuhl 1 verarbeitete Signale empfangen, entsprechend verarbeiten und daraus erzeugte Signale drahtlos senden. Entsprechendes gilt für ein Belegungszustandssignal der Datenverarbeitungseinheit. Ein von der Sendeeinheit des Friseurstuhls 1 drahtlos gesendetes Signal kann auch eine Adresse des Friseurstuhls 1, einen Fehlercode und/oder eine Information über den Zustand eines Energiespeichers des Friseurstuhls 1 umfassen.

Die optionale Datenverarbeitungseinheit des Friseurstuhls 1 kann wie die Sendeeinheit, ein oder mehrere Energiespeicher und/oder weitere elektronische Schaltungen des Friseurstuhls 1 in der Steuerbox 11 untergebracht sein. Die Steuerbox 11 ist bevorzugt an einer Unterseite des Sitzes 3 des Friseurstuhls 1 angeordnet. Dies ermöglicht eine komfortables Nachrüsten sowie Austauschen der Steuerbox 11 samt der darin befindlichen elektronischen Schaltungen und Energiespeicher.

Die dargestellte Ausführungsform des Friseurstuhls 1 stellt nur eine, allerdings bevorzugte Variante eines Friseurstuhls 1 dar. Nicht dargestellt sind insbesondere Varianten mit mehreren Sensoren 2, wobei mindestens zwei der Sensoren 2 zur Erfassung einer unterschiedlichen physikalischen Messgröße ausgebildet sind.

Gemäß einer bevorzugten Ausführungsform des ersten erfindungsgemäßen Verfahrens kann zum Auswerten eines Belegungszustands des Friseurstuhls 1 nun so verfahren werden, wie es wie im Folgenden beschrieben ist.

Zunächst wird mittels der piezoelektrischen Drucksensoren 2 bei Auftreten einer Änderung eines Druckes auf den Sitz 3 des Friseurstuhls 1 die Druckänderung erfasst, die durch eine Person beim Hinsetzen bzw. Aufstehen verursacht wird. Bei Erfassen einer Druckänderung durch die Sensoren 2 werden durch die Sensoren 2 elektrische Ladungen generiert, die zu jeweils einem Ausgangssignal der Sensoren 2 führen. Diese Ausgangssignale der Sensoren 2 werden durch eine oder mehrere elektronische Schaltungen des Friseurstuhls 1 verarbeitet. Anschließend werden die verarbeiteten Signale an die Sendeeinheit des Friseurstuhls 1 geleitet, von dieser empfangen und weiterverarbeitet. Bei der Weiterverarbeitung erstellt die Sendeeinheit ein Ausgangssignal, das eine Information über das Ausgangssignal der Sensoren 2, eine Adresse des Friseurstuhls 1, ggf. einen Fehlercode und/oder ggf. eine Information über den Zustand eines Energiespeichers des Friseurstuhls 1 enthält. Das Ausgangssignal der Sendeeinheit wird drahtlos an eine Empfangseinheit außerhalb des Friseurstuhls 1 übermittelt. Nach Empfang des übermittelten Signals durch die Empfangseinheit wird das übermittelte Signal weiterverarbeitet.

Nun wird auf Basis des weiterverarbeiteten Signals ein Belegungszustand des Friseurstuhls 1 bestimmt, und zwar mittels einer mit der Empfangseinheit verbundenen Datenverarbeitungseinheit. Schließlich wird der bestimmte Belegungszustand ausgewertet.

Das Auswerten des Belegungszustands umfasst dabei die Steuerung mindestens einer Lichtquelle in der Nähe des Friseurstuhls 1. Die Lichtquelle (bzw. Lichtquellen) kann beispielsweise an einem dem Friseurstuhl 1 zugeordneten Spiegel und/oder über dem Friseurstuhl 1 angeordnet sein. Vorzugsweise werden die von der Lichtquelle hervorgerufene Beleuchtungsstärke, Lichtfarbe bzw. Farbtemperatur und/oder die von der Lichtquelle ausgestrahlte Wellenlänge (bzw. Wellenlängen) angepasst. So kann z. B. bei Belegung des Friseurstuhls 1 durch die Person, also beim Hinsetzen der Person auf den Sitz 3 des Friseurstuhls 1, die Lichtquelle angeschaltet werden oder die Helligkeit der Lichtquelle erhöht oder die Farbtemperatur von warmem auf kaltes Licht geändert werden.

Entsprechend kann beim Aufstehen der Person vom Friseurstuhl 1 die Lichtquelle ausgeschaltet oder deren Helligkeit verringert oder die Farbtemperatur von kaltem auf warmes Licht geändert werden.

Typischerweise befindet sich der Friseurstuhl 1 in einem Raum eines Friseursalons. Üblicherweise ist in dem Raum eine Heizvorrichtung und/oder eine Belüftungsvorrichtung vorgesehen. Gemäß der bevorzugten Ausführungsform des ersten erfindungsgemäßen Verfahrens umfasst das Auswerten des Belegungszustands die Regelung der in dem Raum vorherrschenden Temperatur mittels der Temperaturvorrichtung und/oder die Regelung der Belüftung mittels der Belüftungsvorrichtung in Abhängigkeit von dem Belegungszustand.

Bei der bevorzugten Ausführungsform wird darüber hinaus bei festgestellter Belegung des Friseurstuhls 1 durch eine Person Werbung auf oder in einem Teilbereich eines dem Friseurstuhl 1 zugeordneten Spiegels wiedergegeben. Nach dem Aufstehen der Person wird die Wiedergabe der Werbung am oder im Spiegel gestoppt.

Außerdem wird bei festgestellter Belegung des Friseurstuhls 1 durch eine Person ein Zeitmesser gestartet. Dieser Zeitmesser wird gestoppt, sobald festgestellt wird, dass der Friseurstuhl 1 nicht mehr belegt ist. Überschreitet der gemessene Wert des Zeitmessers einen vorbestimmten Schwellwert, wird automatisch eine Nachricht bzw. ein Alarm generiert.

Mit Hilfe der vom Zeitmesser gemessenen Werte kann ferner eine Auslastung des Friseurstuhls 1 ermittelt werden, wobei hier die Werte des Zeitmessers über einen bestimmten Zeitraum berücksichtigt werden.

Bei der bevorzugten Ausführungsform wird automatisch eine Nachricht an ein Kassensystem gesendet, wenn festgestellt wird, dass der Friseurstuhl 1 von einem belegten Zustand in einen unbelegten Zustand gewechselt ist. Auf Basis dieser Nachricht kann ein Mitarbeiter bzw. die Person, die den Friseurstuhl 1 belegt hatte, an einen Bezahlvorgang erinnert werden.

Bei der bevorzugten Ausführungsform wird außerdem anhand der übermittelten Adresse des Friseurstuhls 1 der Friseurstuhl 1 einem Spiegel zugeordnet.

Gemäß einer bevorzugten Ausführungsform eines erfindungsgemäßen Friseursalons hat dieser mehrere Friseurstühle 1, die gemäß der zuvor erläuterten bevorzugten Ausführungsform eines Friseurstuhls 1 ausgestaltet sind.

Der Friseursalon hat außerdem eine Empfangseinheit zum Empfang von Drahtlossignalen von den Friseurstühlen 1, mehrere Spiegel, wobei jeweils ein Spiegel einem Friseurstuhl 1 zugeordnet ist bzw. wird, eine Datenverarbeitungseinheit, ein Kassensystem und ein Platzzuweisungssystem zur Zuweisung einer Person zu einem der Friseurstühle 1.

## Patentansprüche

1. Verfahren zum Auswerten eines Belegungszustands eines Friseurstuhls (1), wobei das Verfahren zumindest folgende Verfahrensschritte umfasst:
- qualitative und/oder quantitative Erfassung einer ersten physikalischen Messgröße, die eine Belegung des Friseurstuhls (1) durch eine Person indiziert mittels mindestens eines ersten Sensors (2),
- Verarbeiten eines vom ersten Sensor (2) erzeugten Signals,
- Empfangen und Weiterverarbeiten des verarbeiteten Signals durch eine Sendeeinheit des Friseurstuhls (1),
- Drahtloses Übermitteln des weiterverarbeiteten Signals mittels der Sendeeinheit an eine Empfangseinheit außerhalb des Friseurstuhls (1),
- Weiterverarbeitung des übermittelten Signals,
- Bestimmen eines Belegungszustands des Friseurstuhls (1) auf Basis des weiterverarbeiteten Signals mittels einer mit der Empfangseinheit verbundenen Datenverarbeitungseinheit außerhalb des Friseurstuhls (1) und
- Auswerten des bestimmten Belegungszustands.

2. Verfahren zum Auswerten eines Belegungszustands eines Friseurstuhls (1), wobei das Verfahren zumindest folgende Verfahrensschritte umfasst:
- qualitative und/oder quantitative Erfassung einer ersten physikalischen Messgröße, die eine Belegung des Friseurstuhls (1) durch eine Person indiziert mittels mindestens eines ersten Sensors (2),
- Verarbeiten eines vom ersten Sensor (2) erzeugten Signals,
- Bestimmen eines Belegungszustands des Friseurstuhls (1) auf Basis des verarbeiteten Signals und Erstellen eines Belegungszustandssignals mittels einer Datenverarbeitungseinheit des Friseurstuhls (1),
- Empfangen und Weiterverarbeiten des Belegungszustandssignals durch eine Sendeeinheit des Friseurstuhls (1),
- Drahtloses Übermitteln des weiterverarbeiteten Signals mittels der Sendeeinheit an eine Empfangseinheit außerhalb des Friseurstuhls (1),
- Weiterverarbeitung des übermittelten Signals,
- Auslesen eines Belegungszustands des Friseurstuhls (1) aus dem weiterverarbeiteten übermittelten Signal und
- Auswerten des ausgelesenen Belegungszustands,
wobei das Auswerten des Belegungszustands umfasst:
- Steuerung oder Regelung
- der von mindestens einer Lichtquelle hervorgerufenen Beleuchtungsstärke,
- einer von mindestens einer Lichtquelle hervorgerufenen Lichtfarbe bzw. Farbtemperatur,
- der Wellenlänge/n des von mindestens einer Lichtquelle abgestrahlten Lichts,
- einer Temperatur in zumindest einem Teilbereich eines Raums, in dem sich der Friseurstuhl (1) befindet, und/oder
- einer Belüftung in zumindest einem Teilbereich eines Raums, in dem sich der Friseurstuhl (1) befindet.

3. Verfahren nach Anspruch 2, wobei das Auswerten des Belegungszustands umfasst:
- Wiedergabe von Informationen, insbesondere Werbung, wobei vorzugsweise zumindest ein Teil der Informationen eine Teilfläche eines Spiegels einnimmt,
- Starten bzw. Stoppen eines Zeitmessers, vorzugsweise wobei bei Überschreiten eines Schwellwertes automatisch eine Meldung generiert wird,
- Bestimmung einer Auslastung des Sitz- oder Liegemöbels (1) innerhalb eines bestimmten Zeitraums und/oder
- Überprüfung eines Bezahlvorgangs der Person.

4. Verfahren nach einem der Ansprüche 1 bis 3, wobei das Verfahren ferner das Zuordnen des Friseurstuhls (1) zu einem Spiegel anhand der Adresse des Friseurstuhls (1) umfasst.

5. Verfahren nach Anspruch 1 oder 4, wobei das Auswerten des Belegungszustands die Steuerung oder Regelung der von mindestens einer Lichtquelle hervorgerufenen Beleuchtungsstärke umfasst.

6. Verfahren nach Anspruch 1, 4 oder 5, wobei das Auswerten des Belegungszustands die Steuerung oder Regelung einer von mindestens einer Lichtquelle hervorgerufenen Lichtfarbe bzw. Farbtemperatur umfasst.

7. Verfahren nach Anspruch 1 oder einem der Ansprüche 4 bis 6, wobei das Auswerten des Belegungszustands die Steuerung oder Regelung der Wellenlänge/n des von mindestens einer Lichtquelle abgestrahlten Lichts umfasst.

8. Verfahren nach Anspruch 1 oder einem der Ansprüche 4 bis 7, wobei das Auswerten des Belegungszustands die Steuerung oder Regelung einer Temperatur in zumindest einem Teilbereich eines Raums, in dem sich der Friseurstuhl (1) befindet, umfasst.

9. Verfahren nach Anspruch 1 oder einem der Ansprüche 4 bis 8, wobei das Auswerten des Belegungszustands die Steuerung oder Regelung einer Belüftung in zumindest einem Teilbereich eines Raums, in dem sich der Friseurstuhl (1) befindet, umfasst.

10. Verfahren nach Anspruch 1 oder einem der Ansprüche 4 bis 9, wobei das Auswerten des Belegungszustands die Wiedergabe von Informationen umfasst.

11. Verfahren nach Anspruch 1 oder einem der Ansprüche 4 bis 10, wobei das Auswerten des Belegungszustands die Bestimmung einer Auslastung des Friseurstuhls (1) innerhalb eines bestimmten Zeitraums umfasst.

12. Verfahren nach Anspruch 1 oder einem der Ansprüche 4 bis 11, wobei das Auswerten des Belegungszustands die Überprüfung eines Bezahlvorgangs der Person umfasst.

13. Verfahren nach einem der vorhergehenden Ansprüche, wobei der Friseurstuhl (1) höhenverstellbar, drehbar und bewegbar ist.

14. Friseursalon mit
- mindestens einem Friseurstuhl (1), der mindestens einen Sensor (2) zur qualitativen und/oder quantitativen Erfassung einer physikalischen Messgröße, die eine Belegung des Friseurstuhls (1) durch eine Person indiziert, aufweist, wobei der Sensor (2) mindestens ein Signal erzeugt,
- mit einer Sendeeinheit des Friseurstuhls (1), zum drahtlosen Übermitteln des Signals,
- mindestens einer Empfangseinheit außerhalb des Friseurstuhls (1) zum Empfang des drahtlos übermittelten Signals des Friseurstuhls (1),
- mindestens einem dem Friseurstuhl (1) zugeordneten Spiegel,
- mindestens einer Datenverarbeitungseinheit außerhalb des Friseurstuhls (1) zur Bestimmung des Belegungszustandes des Friseurstuhls (1),
- mindestens einem Kassensystem und
- einem Platzzuweisungssystem zur Zuweisung einer Person zum Friseurstuhl (1).

15. Friseursalon nach Anspruch 14, wobei der Friseurstuhl (1) höhenverstellbar, drehbar und bewegbar ist.

## Claims

1. Method for evaluating an occupancy state of a hair salon chair (1), wherein the method comprises at least the following method steps:
- qualitative and/or quantitative detection of a first physical measurand indicating an occupancy of the hair salon chair (1) by a person by means of at least one first sensor (2),
- processing a signal generated by the first sensor (2),
- receiving and further processing of the processed signal by a transmitter unit of the hair salon chair (1),
- wirelessly transmitting the further processed signal by means of the transmitter unit to a receiver unit outside the hair salon chair (1),
- further processing of the transmitted signal,
- determining an occupancy state of the hair salon chair (1) on the basis of the further processed signal by means of a data processing unit, which is connected to the receiver unit, outside the hair salon chair (1) and
- evaluating the determined occupancy state.

2. Method for evaluating an occupancy state of a hair salon chair (1), wherein the method comprises at least the following method steps:
- qualitative and/or quantitative detection of a first physical measurand indicating an occupancy of the hair salon chair (1) by a person by means of at least one first sensor (2),
- processing a signal generated by the first sensor (2),
- determining an occupancy state of the hair salon chair (1) on the basis of the processed signal and generating an occupancy state signal by means of a data processing unit of the hair salon chair (1),
- receiving and further processing of the occupancy state signal by a transmitter unit of the hair salon chair (1),
- wirelessly transmitting the further processed signal by means of the transmitter unit to a receiver unit outside the hair salon chair (1),
- further processing of the transmitted signal,
- reading out an occupancy state of the hair salon chair (1) from the further processed transmitted signal and
- evaluating the read-out occupancy state,
wherein evaluating the occupancy state comprises:
- control or feedback-control of
- the illuminance caused by at least one light source,
- a luminous colour and/or colour temperature caused by at least one light source,
- the wavelength/s of light emitted by at least one light source,
- a temperature in at least a portion of a room in which the hair salon chair (1) is located, and/or
- a ventilation in at least a portion of a room in which the hair salon chair (1) is located.

3. Method according to claim 2, wherein evaluating the occupancy state comprises:
- reproduction of information, in particular advertising, preferably wherein at least part of the information occupies a partial surface of a mirror,
- starting or stopping a timer, preferably wherein a message is generated automatically when a threshold value is exceeded,
- determination of a utilization of the seating or reclining furniture (1) within a certain period of time and/or
- verification of a payment process of the person.

4. Method according to any one of claims 1 to 3, the method further comprising assigning the hair salon chair (1) to a mirror based on the address of the hair salon chair (1).

5. Method according to claim 1 or 4, wherein evaluating the occupancy state comprises the control or feedback-control of the illuminance caused by at least one light source.

6. Method according to claim 1, 4 or 5, wherein evaluating the occupancy state comprises the control or feedback-control of a luminous colour and/or colour temperature caused by at least one light source.

7. Method according to claim 1 or one of claims 4 to 6, wherein evaluating the occupancy state comprises the control or feedback-control of the wavelength/s of the light emitted by at least one light source.

8. Method according to claim 1 or one of claims 4 to 7, wherein evaluating the occupancy state comprises the control or feedback-control of a temperature in at least a portion of a room in which the hair salon chair (1) is located.

9. Method according to claim 1 or one of claims 4 to 8, wherein evaluating the occupancy state comprises the control or feedback-control of a ventilation in at least a portion of a room in which the hair salon chair (1) is located.

10. Method according to claim 1 or one of claims 4 to 9, wherein evaluating the occupancy state comprises the reproduction of information.

11. Method according to claim 1 or one of claims 4 to 10, wherein evaluating the occupancy state comprises the determination of a utilization of the hair salon chair (1) within a certain period of time.

12. Method according to claim 1 or one of claims 4 to 11, wherein evaluating the occupancy state comprises the verification of a payment process of the person.

13. Method according to one of the preceding claims, wherein the hair salon chair (1) is adjustable in height, rotatable and movable.

14. Hair salon with
- at least one hair salon chair (1) comprising at least one sensor (2) for the qualitative and/or quantitative detection of a physical measurand which indicates an occupancy of the hair salon chair (1) by a person,
- wherein the sensor (2) generates at least one signal,
- with a transmitter unit of the hair salon chair (1), for wirelessly transmitting of the signal,
- at least one receiver unit outside the hair salon chair (1) for receiving the wirelessly transmitted signal of the hair salon chair (1),
- at least one mirror assigned to the hair salon chair (1),
- at least one data processing unit outside the hair salon chair (1) for determination of the occupancy state of the hair salon chair (1),
- at least one cash register system, and
- a seat allocation system for allocating a person to the hair salon chair (1).

15. Hair salon according to claim 14, wherein the hair salon chair (1) is adjustable in height, rotatable and movable.

## Revendications

1. Méthode d'évaluation d'un état d'occupation d'un fauteuil de coiffeur (1), la méthode comprenant au moins les étapes de méthode suivantes :
- détection qualitative et/ou quantitative d'une première grandeur physique mesurée indiquant une occupation du fauteuil du coiffeur (1) par une personne au moyen d'au moins un premier capteur (2),
- traitement d'un signal généré par le premier capteur (2),
- réception et traitement ultérieur du signal traité par une unité d'émission du fauteuil du coiffeur (1),
- transmission sans fil du signal traité ultérieurement au moyen de l'unité d'émission vers une unité de réception à l'extérieur du fauteuil du coiffeur (1),
- traitement ultérieur du signal transmis,
- détermination d'un état d'occupation du fauteuil de coiffeur (1) sur la base du signal traité ultérieurement au moyen d'une unité de traitement des données connectée à l'unité de réception à l'extérieur du fauteuil de coiffeur (1) et
- évaluation de l'état d'occupation déterminé.

2. Méthode d'évaluation d'un état d'occupation d'un fauteuil de coiffeur (1), la méthode comprenant au moins les étapes de méthode suivantes :
- détection qualitative et/ou quantitative d'une première grandeur physique mesurée indiquant une occupation du fauteuil du coiffeur (1) par une personne au moyen d'au moins un premier capteur (2),
- traitement d'un signal généré par le premier capteur (2),
- détermination d'un état d'occupation du fauteuil de coiffeur (1) sur la base du signal traité et génération d'un signal d'état d'occupation au moyen d'une unité de traitement des données du fauteuil de coiffeur (1),
- réception et traitement ultérieur du signal d'état d'occupation par une unité d'émission du fauteuil du coiffeur (1),
- transmission sans fil du signal traité ultérieurement au moyen de l'unité d'émission vers une unité de réception à l'extérieur du fauteuil du coiffeur (1),
- traitement ultérieur du signal transmis,
- lecture d'un état d'occupation du fauteuil du coiffeur (1) à partir du signal transmis traité ultérieurement et
- évaluation de l'état d'occupation lu,
l'évaluation de l'état d'occupation comprenant :
- contrôle ou régulation de
- l'éclairement produit par au moins une source lumineuse,
- une couleur de lumière et/ou une température de couleur produite par au moins une source lumineuse,
- la ou les longueurs d'onde de la lumière émise par au moins une source lumineuse,
- une température dans au moins une partie de la pièce où se trouve le fauteuil du coiffeur (1), et/ou
- une ventilation dans au moins une partie de la pièce où se trouve le fauteuil du coiffeur (1).

3. Méthode selon la revendication 2, dans laquelle l'évaluation de l'état d'occupation comprend :
- reproduction d'informations, en particulier la publicité, de préférence avec au moins une partie de l'information occupant une surface partielle d'un miroir,
- démarrage ou arrêt d'une chronomètre, de préférence avec un message généré automatiquement lorsqu'une valeur seuil est dépassée,
- détermination d'une utilisation du mobilier d'assise ou de couchage (1) dans un certain délai et/ou
- vérification d'une opération de paiement de la personne.

4. Méthode selon l'une quelconque des revendications 1 à 3, la méthode comprenant en outre l'association du fauteuil de coiffeur (1) avec un miroir basé sur l'adresse du fauteuil de coiffeur (1).

5. Méthode selon la revendication 1 ou 4, dans laquelle l'évaluation de l'état d'occupation comprend le contrôle ou la régulation de l'éclairement provoqué par au moins une source lumineuse.

6. Méthode selon la revendication 1, 4 ou 5, dans laquelle l'évaluation de l'état d'occupation comprend le contrôle ou la régulation d'une couleur de lumière et/ou d'une température de couleur provoquée par au moins une source lumineuse.

7. Méthode selon la revendication 1 ou l'une des revendications 4 à 6, dans laquelle l'évaluation de l'état d'occupation comprend le contrôle ou la régulation de la ou des longueurs d'onde de la lumière émise par au moins une source lumineuse.

8. Méthode selon la revendication 1 ou l'une des revendications 4 à 7, dans laquelle l'évaluation de l'état d'occupation comprend le contrôle ou la régulation d'une température dans au moins une partie d'une pièce où se trouve le fauteuil du coiffeur (1).

9. Méthode selon la revendication 1 ou l'une des revendications 4 à 8, dans laquelle l'évaluation de l'état d'occupation comprend le contrôle ou la régulation d'une ventilation dans au moins une partie d'une pièce où se trouve le fauteuil de coiffure (1).

10. Méthode selon la revendication 1 ou l'une des revendications 4 à 9, dans laquelle l'évaluation de l'état d'occupation comprend la reproduction d'informations.

11. Méthode selon la revendication 1 ou l'une des revendications 4 à 10, dans laquelle l'évaluation de l'état d'occupation comprend la détermination d'une utilisation du fauteuil de coiffeur (1) dans un certain délai.

12. Méthode selon la revendication 1 ou l'une des revendications 4 à 11, dans laquelle l'évaluation de l'état d'occupation comprend la vérification d'une opération de paiement de la personne.

13. Méthode selon l'une des revendications précédentes, dans laquelle le fauteuil du coiffeur (1) est réglable en hauteur, rotatif et mobile.

14. Salon de coiffure avec
- au moins un fauteuil de coiffeur (1) comprenant au moins un capteur (2) pour la détection qualitative et/ou quantitative d'une grandeur physique mesurée indiquant une occupation du fauteuil de coiffeur (1) par une personne,
- le capteur (2) générant au moins un signal,
- avec une unité d'émission du fauteuil du coiffeur (1), pour la transmission sans fil du signal,
- au moins une unité de réception à l'extérieur du fauteuil de coiffeur (1) pour la réception du signal transmis sans fil du fauteuil de coiffeur (1),
- au moins un miroir associé au fauteuil de coiffeur (1),
- au moins une unité de traitement des données à l'extérieur du fauteuil de coiffeur (1) pour la détermination de l'état d'occupation du fauteuil de coiffeur (1),
- au moins un système de caisse, et
- un système d'attribution des sièges pour attribuer une personne au fauteuil du coiffeur (1).

15. Salon de coiffure selon la revendication 14, dans lequel le fauteuil de coiffeur (1) est réglable en hauteur, rotatif et mobile.
